(19) Europäisches Patentamt
European Patent Office
Office européen des brevets

(11) **EP 0 563 688 B1**

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int. Cl.$^6$: **C04B 33/14**, C09C 1/24

(21) Anmeldenummer: **93104389.7**

(22) Anmeldetag: **18.03.1993**

(54) **Rote keramische Formkörper sowie Verfahren zu deren Herstellung**

Red ceramic bodies and process for preparing the same

Corps céramiques rouges façonnés et procédé de leur préparation

(84) Benannte Vertragsstaaten:
**DE ES FR IT**

(30) Priorität: **31.03.1992 DE 4210501**

(43) Veröffentlichungstag der Anmeldung:
**06.10.1993 Patentblatt 1993/40**

(73) Patentinhaber: **BAYER AG**
**51368 Leverkusen (DE)**

(72) Erfinder:
• **Lerch, Klaus, Dr.**
**W-4150 Krefeld (DE)**
• **Kuske, Peter, Dr.**
**W-4150 Krefeld (DE)**
• **Kröner, Walter, Dipl.-Ing.**
**W-5000 Köln 80 (DE)**
• **Buxbaum, Gunter, Dr.**
**W-4150 Krefeld (DE)**

(56) Entgegenhaltungen:
EP-A- 0 187 331          EP-A- 0 220 553
EP-A- 0 290 908

• **DATABASE WPI Week 9049, Derwent Publications Ltd., London, GB; AN 90-365443 & JP-A-2 263 870 (SASAKI)**

**Beschreibung**

Die vorliegende Erfindung betrifft im Schnellbrand erhaltene rote keramische Formkörper, insbesondere Fliesen, die Eisenoxide als färbende Komponenten enthalten, sowie ein Verfahren zu deren Herstellung.

Das Schnellbrandverfahren wurde in der Steinzeugplattenproduktion eingeführt, um Personal- und Energiekosten zu senken (Gatzke, H.: Schnellbrand - Voraussetzungen, Möglichkeiten, Grenzen: Keram, Z. 21 (1969) 219-224; Hakort, D.: Vorteile, Grenzen und Zukunftsaspekte des keramischen Schnellbrandes: Glas-Email-Keramik-Technik (1971) Heft 1, 15-22).

Während Wasseraufnahme und Festigkeit schnellgebrannter Produkte bereits den konventionell hergestellten Standards genügen, stellt eine wichtige qualitätsbestimmende Eigenschaft, die gleichmäßige, ästhetische Färbung der Scherben, noch ein Problem dar (Vocke, P.: Ber. Dtsch. Keram. Ges. 63 (1986) 203-213). Erhält man im konventionellen Brand rote bis braune Farbtöne, so ergeben entsprechende Massen im Schnellbrand einen unangenehm grünstichigen Farbton. Zudem erhält man beim Einsatz herkömmlicher Eisenoxide schwach eingefärbte Fliesen, die darüber hinaus als ästhetischen Mangel stets fleckig sind. Eine Intensivierung des Farbtons durch erhöhten Zusatz von Eisenoxid verbietet sich, da andere qualitätsbestimmende Eigenschaften der Keramikfliesen (z.B. Wasseraufnahme, Festigkeit) nachteilig beeinflußt werden. Die beschriebenen Nachteile verhinderten bislang den Einsatz herkömmlicher Eisenoxide zur Einfärbung von Keramikfliesen im Schnellbrand. Stattdessen wurden gemäß der DE-A-2 312 535 teure, durch aufwendige Umhüllungsverfahren hergestellte Farbkörper, die zum Teil auch toxikologisch bedenkliche Bestandteile, wie etwa CdS oder CdSe enthalten, eingesetzt. Zudem ergeben diese Farbkörper nicht die vom klassischen Brennverfahren her bekannten angenehmen Farbtöne.

Die Aufgabe der vorliegenden Erfindung ist es somit, keramische Massen zur Verfügung zu stellen, mit denen auch im Schnellbrand die vom klassischen Brennverfahren (Tunnelofen) her bekannten Cotto- und Ziegelrottöne erreicht werden können und die die genannten Nachteile nicht aufweisen.

Überraschenderweise wurde nun gefunden, daß beim Einsatz von Si-armen Eisenoxiden im Schnellbrandverfahren gleichmäßig eingefärbte Fliesen mit einer intensiven Rotfärbung erhalten werden können. Dieser Effekt ist umso überraschender, wenn man bedenkt, daß die keramischen Massen selbst erhebliche Mengen an $SiO_2$ enthalten. Für die Farbreinheit der keramischen Formkörper ist ein niedriger Mn-Gehalt förderlich. Zur Herstellung der keramischen Massen wird in üblicher Weise vorgegangen, mit der Ausnahme, daß den Massen ein entsprechend reines Eisenoxid zugesetzt wird. Die zugesetzte Menge kann 1-10 Gew.-%, bevorzugt 3-7 Gew.-% betragen, wobei das Eisenoxid sowohl als Pulver als auch in Granulatform zugesetzt werden kann.

Der Vergleich einer unter Verwendung eines hochreinen Eisenoxids im Schnellbrand hergestellten Keramik und einer entsprechenden Keramik, die durch Zusatz eines herkömmlichen Eisenoxids eingefärbt wurde, zeigt deutlich die gleichmäßigere Einfärbung der ersten Keramikfliese.

Zur Bestimmung des Farbtons wurden die Keramiken farbmetrisch geprüft. Hierzu erfolgte die Bestimmung der CIELAB-Daten (DIN 6174) mit einem Farbmeßgerät mit Ulbrichtkugel (Beleuchtungsbedingungen d/8°, Normlichtart C/2°) unter Einschluß der Oberflächenreflexion. Zur Bestimmung der Intensität der Färbung (Farbstärke) wurde zunächst die Kubelka-Munk-Funktion auf den Normfarbwert Y (DIN 5033) angewendet: $F = (1-Y/100)^2/(2 \cdot Y/100)$. Anschließend wurde die relative Farbstärke wie folgt berechnet: $P = (F_{Probe}/F_{Bezug}) \cdot 100\,\%$.

Als Bezug wurde die Farbstärke des in Beispiel 1 hergestellten Formkörpers gewählt.

Zum Abgleich der Farbmeßgeräte wurden die CIELAB-Daten von zwei Keramikstandards der British Ceramic Research Association LTD (zu beziehen bei Fa. Datacolor ACS ICS, Dietlikon, Schweiz oder jedem anderen großen Farbmeßgerätehersteller) bestimmt und die relative Farbstärke wie beschrieben berechnet. Die Ergebnisse sind in Tabelle 1 zusammengestellt.

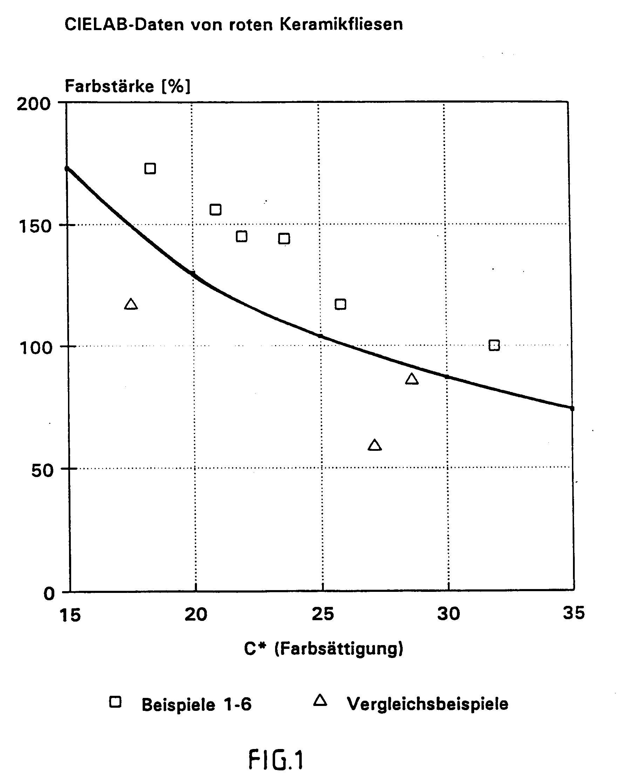

Fig. 1 und Tabelle 1 ist zu entnehmen, daß nach dem beschriebenen Verfahren rote Keramikfliesen mit hoher Farbstärke und Sättigung erhalten werden können, Sättigungs- und Farbstärkewerte, die bislang nur im Tunnelofenbrand möglich waren, werden erreicht und zum Teil sogar übertroffen, Diese ästhetisch ansprechenden Farbtöne liegen im Farbstärke/Farbsättigungs-Diagramm oberhalb der durch die Gleichung $C^* \times P = 2600$ bestimmten Kurve.

Das erfindungsgemäße Ergebnis zeigt sich auch bei der Herstellung von Keramiken für den Geschirr-, Sanitär- oder Ziegelsektor.

Gegenstand dieser Erfindung sind somit keramische Massen, die 1 bis 10 Gew.-%, bevorzugt 3 bis 7 Gew.-%, Eisenoxidpigmente, berechnet als $Fe_2O_3$, als färbende Komponente enthalten, welche dadurch gekennzeichnet sind, daß das Produkt aus Farbstärke und Farbsättigung größer als 2600 ist.

Bevorzugt weisen die eingesetzten Eisenoxide Si-Gehalte von weniger als 0,5 Gew.-% und Mn-Gehalte von weniger als 0,06 Gew.-% auf, wogegen herkömmliche, z.B. nach DE-C 463 773 hergestellte Eisenoxide Si-Gehalte von ca. 1 Gew.-% und Mn-Gehalte von ca. 0,1 Gew.-% aufweisen.

Gegenstand der Erfindung ist somit auch das Verfahren zur Herstellung von Keramiken im Schnellbrand, wobei das eingesetzte Eisenoxid einen Si-Gehalt von weniger als 0,5 Gew.-% und einen Mn-Gehalt von weniger als 0,06 Gew.-% aufweist. Die Teilchengröße der verwendeten Eisenoxide liegt in dem für Pigmente üblichen Bereich (0,1 - 1 μm). Über

die Teilchengröße läßt sich in der dem Fachmann bekannten Weise die Farbnuance einstellen. Hierbei kann das Pigment sowohl in Form des Pulvers als auch in granulierter Form verwendet werden.

Es können sowohl isometrische als auch nadelförmige Eisenoxide in allen bekannten Kristallmodifikationen eingesetzt werden, Bevorzugt werden gelbe (alpha-FeOOH), rote (alpha-$Fe_2O_3$) und schwarze ($Fe_3O_4$) Eisenoxidpigmente eingesetzt. Beim Einsatz von alpha-FeOOH erhält man Cottorottöne, während bei Verwendung von $Fe_2O_3$ Ziegelrottöne erzielt werden.

Die maximale Brenntemperatur beträgt üblicherweise 1180 bis 1220°C, bevorzugt ca, 1180°C.

Die Dauer des Brandes liegt zwischen 25 Minuten und 6 Stunden, bevorzugt 40-80 Minuten, Der Fachmann kann jedoch je nach den Eigenschaften der anderen Bestandteile des Versatzes mühelos die optimalen Brennbedingungen variieren.

Nachfolgend wird die Erfindung beispielhaft beschrieben, wobei hierin keine Einschränkung auf die Beispiele zu sehen ist. Anschließend werden Vergleichsbeispiele angegeben, bei denen herkömmliche Eisenoxide zur Einfärbung verwendet wurden und die zu unbefriedigenden Resultaten führten (Vergleichsbeispiel 7-9). Die CIELAB-Daten sind in Tabelle 1 zusammengefaßt.

Beispiel 1

Steinzeugton aus dem Westerwald wird naß in einer Kugelmühle aufbereitet. 5 Gew.-% eines Eisenoxides, das aus annähernd isometrischen Teilchen (alpha-FeOOH) einer mittleren Größe von 0,5 µm besteht und eine spezifische Oberfläche von 12 $m^2$/g aufweist und als Nebenbestandteils 0,035 Gew.-% Mn, 0,015 Gew.-% Si und 0,35 Gew.-% Al enthält (herstellbar nach EP 132 682, z.B. Bayferrox 915, Handelsprodukt der Fa. Bayer AG) werden zugesetzt. Die Mischung wird sprühgetrocknet (7 % Restfeuchte). Mit einer Hydraulikpresse werden Kacheln von 95 mm x 95 mm x 6 mm geformt. Die Kacheln werden für 70 Minuten in einem Rollenofen bei einer Maximaltemperatur von 1180°C gebrannt.

Beispiel 2

Es wird wie in Beispiel 1 verfahren, jedoch beträgt die maximale Ofentemperatur 1215°C.

Beispiel 3

Es wird wie in Beispiel 1 verfahren, jedoch wird ein Eisenoxid verwendet, das aus nadelförmigen Teilchen (alpha-$Fe_2O_3$) einer mittleren Größe von 0,15 x 0,6 µm besteht, eine spezifische Oberfläche von 3,5 $m^2$/g aufweist und als Nebenbestandteile 0,01 Gew.-% Mn und 0,01 Gew.-% Si enthält (z.B. Bayferrox 1352, Handelsprodukt der Fa. Bayer AG).

Beispiel 4

Es wird wie in Beispiel 3 verfahren, jedoch beträgt die maximale Ofentemperatur 1215°C.

Beispiel 5

Es wird wie in Beispiel 1 verfahren, jedoch wird ein Eisenoxid verwendet, das aus nadelförmigen Teilchen (alpha-$Fe_2O_3$) einer mittleren Große von 0,2 x 0,8 µm besteht und eine spezifische Oberfläche von 3,0 $m^2$/g aufweist und als Nebenbestandteile 0,015 Gew.-% Mn und 0,015 Gew.-% Si enthält (z.B. Bayferrox 1360, Handelsprodukt der Fa. Bayer AG).

Beispiel 6

Es wird wie in Beispiel 1 verfahren, jedoch wird als Eisenoxid eine Mischung aus gleichen Teilen der in Beispiel 1 und Beispiel 3 beschriebene Oxide verwendet.

Vergleichsbeispiele

Beispiel 7

Es wird wie in Beispiel 1 verfahren, jedoch wird ein Eisenoxid verwendet, das aus isometrischen Teilchen (alpha-$Fe_2O_3$) einer mittleren Größe von 0,09 µm besteht und eine spezifische Oberfläche von 18 $m^2$/g aufweist und als Nebenbestandteile 0,07 Gew.-% Mn und 1 Gew.-% Si enthält (z.B. Bayferrox 110M, Handelsprodukt der Fa. Bayer AG).

Beispiel 8

Es wird wie in Beispiel 1 verfahren, jedoch wird ein Eisenoxid verwendet, das aus isometrischen Teilchen (alpha-$Fe_2O_3$) einer mittleren Größe von 0,17 µm besteht und eine spezifische Oberfläche von 8 m²/g aufweist und als Nebenbestandteile 0,08 Gew.-% Mn und 1 Gew.-% Si enthält (z.B. Bayferrox 130, Handelsprodukt der Fa. Bayer AG).

Beispiel 9

Es wird wie in Beispiel 1 verfahren, jedoch wird ein Eisenoxid verwendet, das aus isometrischen Teilchen ($Fe_3O_4$) einer mittleren Größe von 0,2 µm besteht und eine spezifische Oberfläche von 10 m²/g aufweist und als Nebenbestandteile 0,7 % Mn und 1,1 % Si enthält (z.B. Bayferrox 318, Handelsprodukt der Fa. Bayer AG).

## Tabelle 1    CIELAB-Daten von Keramikfliesen

| Beispiel Nr. | Pigmentierung % | Brenntemp. C | L* | a* | b* | C* | Farbstärke % | C* x Farbstärke | Mn ppm | Si ppm |
|---|---|---|---|---|---|---|---|---|---|---|
| 1 | 5 | 1180 | 46,1 | 20,3 | 24,6 | 31,9 | 100 | 3190 | 350 | 150 |
| 2 | 5 | 1215 | 40,5 | 14 | 16,9 | 21,9 | 145 | 3176 | 350 | 150 |
| 3 | 5 | 1180 | 40,6 | 17,5 | 15,8 | 23,6 | 144 | 3398 | 100 | 100 |
| 4 | 5 | 1215 | 37,9 | 13,5 | 12,3 | 18,3 | 173 | 3166 | 100 | 100 |
| 5 | 5 | 1180 | 39,4 | 16,3 | 13,1 | 20,9 | 156 | 3260 | 150 | 150 |
| 6 | 5. | 1180 | 43,7 | 17,8 | 18,7 | 25,8 | 117 | 3019 | 125 | 125 |
| Vergleichsbeispiele | | | | | | | | | | |
| 7 | 5 | 1180 | 54 | 15,3 | 22,4 | 27,1 | 59 | 1599 | 700 | 10000 |
| 8 | 5 | 1180 | 48,4 | 20 | 20,5 | 28,6 | 86 | 2460 | 800 | 10000 |
| 9 | 5 | 1180 | 43,7 | 12,6 | 12,2 | 17,5 | 117 | 2048 | 700 | 11000 |

Ceramic Colour Standards Serie II (British Ceramic Research Association LTD)

| | | | L* | a* | b* | C* | Farbstärke % | | | |
|---|---|---|---|---|---|---|---|---|---|---|
| Mid Grey | | | 59,1 | -0,1 | 0,2 | 0,2 | 42 | | | |
| Deep Pink | | | 45,8 | 24,3 | 4,8 | 24,8 | 102 | | | |

EP 0 563 688 B1

**Patentansprüche**

1. Im Schnellbrand hergestellte rote keramische Formkörper, insbesondere Fliesen, die 1 bis 10 Gew.-%, bevorzugt 3 bis 7 Gew.-%, Eisenoxidpigmente, berechnet als $Fe_2O_3$, als färbende Komponente enthalten, dadurch gekennzeichnet, daß das Produkt aus Farbstärke und Farbsättigung größer als 2600 ist.

2. Keramische Formkörper gemäß Anspruch 1, dadurch gekennzeichnet, daß die Farbstärke größer als 50 % und die Farbsättigung größer als 15 CIELAB-Einheiten beträgt.

3. Verfahren zur Herstellung von keramischen Formkörpern im Schnellbrand gemäß einem der Ansprüche 1 oder 2 durch Mischen von Ton, üblichen Zuschlagstoffen und Eisenoxiden, Formen und Brennen, dadurch gekennzeichnet, daß die Eisenoxide einen Si-Gehalt von weniger als 0,5 Gew.-% aufweisen.

4. Verfahren gemäß Anspruch 3, dadurch gekennzeichnet, daß das Eisenoxid einen Mn-Gehalt von weniger als 0,06 Gew.-% aufweist.

5. Verfahren gemiß einem der Ansprüche 3 oder 4, dadurch gekennzeichnet, daß das Eisenoxid alpha-FeOOH, gamma-FeOOH, alpha-$Fe_2O_3$ und/oder $Fe_3O_4$ ist.

6. Verfahren gemäß einem oder mehreren der Ansprüche 3 bis 5, dadurch gekennzeichnet, daß die Eisenoxide Eisenoxidpigmente sind.

**Claims**

1. Red ceramic mouldings produced by rapid-firing, particularly tiles, which contain 1 to 10 % by weight, preferably 3 to 7 % by weight, of iron oxide pigments, calculated as $Fe_2O_3$, as the colorific component, characterised in that the product of colour intensity and colour saturation is greater than 2600.

2. Ceramic mouldings according to claim 1, characterised in that the colour intensity is greater than 50 % and the colour saturation is greater than 15 CIELAB units.

3. A process for producing ceramic mouldings by rapid-firing according to either one of claims 1 or 2 by mixing clay, customary additive materials and iron oxides, moulding and firing, characterised in that the iron oxides have an Si content less than 0.5 % by weight.

4. A process according to claim 3, characterised in that the iron oxide has an Mn content less than 0.06 % by weight.

5. A process according to either one of claims 3 or 4, characterised in that the iron oxide is alpha-FeOOH, gamma-FeOOH, alpha-$Fe_2O_3$ and/or $Fe_3O_4$.

6. A process according to one or more of claims 3 to 5, characterised in that the iron oxides are iron oxide pigments.

**Revendications**

1. Corps céramiques rouges, notamment carreaux, fabriqués en cuisson rapide, contenant 1 à 10 % en poids, de préférence 3 à 7 % en poids, de pigments d'oxyde de fer calculés en $Fe_2O_3$, en tant que composants colorants, caractérisés en ce que le produit de l'intensité de la teinte par la saturation de la teinte est supérieur à 2 600.

2. Corps céramiques selon la revendication 1, caractérisés en ce que l'intensité de la teinte est supérieure à 50 % et la saturation de la teinte supérieure à 15 unités CIELAB.

3. Procédé de fabrication de corps céramiques en cuisson rapide selon une des revendications 1 et 2 par mélange d'argile, d'additifs usuels et d'oxydes de fer, moulage et cuisson, caractérisé en ce que les oxydes de fer présentent une teneur en Si inférieure à 0,5 % en poids.

4. Procédé selon la revendication 3, caractérisé en ce que l'oxyde de fer présente une teneur en Mn inférieure à 0,06 % en poids.

5. Procédé selon une des revendications 3 et 4, caractérisé en ce que l'oxyde de fer est alpha-FeOOH, gamma-FeOOH, alpha-$Fe_2O_3$ et/ou $Fe_3O_4$.

6. Procédé selon une ou plusieurs des revendications 3 à 5, caractérisé en ce que les oxydes de fer sont des pigments d'oxydes de fer.

## CIELAB-Daten von roten Keramikfliesen

FIG.1